# EUROPEAN PATENT APPLICATION

(11) **EP 0 846 594 A2**
(43) Date of publication of application: **10.06.1998**
(21) Application number: 97121455.6
(22) Date of filing: 05.12.1997
(51) Int. Cl.: B60Q 3/06, B60Q 3/02

(54) **Interior space lightening unit for a vehicle**

(30) Priority: 05.12.1996 DE 29621162 U
(71) Applicant: DONNELLY CORPORATION, Holland Michigan 49423 (US)
(72) Inventor: Thau, Wolfgang, 58285 Gevelsberg (DE); Hempel, Thomas, 71636 Ludwigsburg (DE)
(74) Representative: Zinngrebe, Horst, Dr.rer.nat.

(57) **Abstract**

Disclosed is an interior space lightening unit for a car having a housing (1) including a lower side (3) and an upper side (4). The lower side (3) is provided with a lower window (6) behind which a first lamp is arranged, and the upper side (4) is provided with an upper window (5) behind which a second lamp is arranged. A switch (7) is coupled to the current supply circuit for the lamps and is mounted to the housing adapted to be mounted to a tiltable support, for illuminating the passenger space in case the rear flap (10) is closed or the luggage boot in case the rear boot is open.

## Description

### Field of the Invention

The invention refers to an interior space lightening unit for a vehicle, having a housing with a lower side and an upper side.

### Description of the Related Art

Such an interior space lightening unit may be placed within the rearward portion of the vehicle for illuminating the space in front of it, i.e. primarily for the passengers sitting upon the rearward seats of the car. When loading the luggage boot it is desirable to obtain an illumination of the luggage boot or of the loading area of a station wagon. To this end additional lamps are necessary.

### Brief Summary of the Invention

It is therefore an object of the invention to improve the illumination of the rearward portion of the vehicle.

According to the invention the interior space lightening unit has a housing which includes a first lamp mounted behind a lower window of the lower side and which includes a second lamp mounted behind an upper window of the upper side of the housing, a three-position-switch being provided within a current supply circuit for the lamps within the housing adapted to be mounted to a tiltable support. Due to the three-position-switch only one of both lamps is coupled to the current supply circuit at a time. Thus, the first lamp may emit light substantially forwardly if the support of the housing assumes a first position, while the second lamp may illuminate the luggage boot or the loading area completely if the support of the housing assumes a second position tilted with respect to the first position.

In a preferred embodiment of the invention the housing has a mounting side which is neither the lower side nor the upper side and by which it may be mounted to a tiltable window, for instance the rearward window of the vehicle, e.g. by bonding to the window. This embodiment results in a simplified construction because special means at the roof of the vehicle for mounting the housing of the lightening unit are obviated. Preferably the three-position-switch is responsible to the tilting position of the housing support and may be implemented e.g. by a mercury switch.

According to a further aspect of the invention the housing may be designed such that further components may be accommodated therein which are so far mounted at various positions within the vehicle. Thus, the mounting side facing rearwardly when the back flap is closed may be provided with a first opening within which a third brake light of the vehicle may be arranged. The mounting side further may be provided with a second opening within which a rain sensor may be arranged controlling a wiper motor for the window. Last not least the mounting side may be provided with a third opening within which a light sensor may be arranged for controlling an electrochrome inner rearward mirror of the vehicle and/or the sunshine roof and/or a visual cover blind.

Thereby the housing of the interior space lightening unit may be regarded as an illuminating module including various functions and resulting in dense package of electric components and minimizing the number of electric supply lines. Moreover. it is easy to connect the housing to an electric bus already present within the vehicle. If the material of the housing from which it is made is selected to be electric conductive, e.g. a metal, all electric components integrated within the housing may shielded by one means. The position of the interior space lightening unit within the glass area wiped free by the rearward window wiper assures always good functional conditions for sensors, lamps, camera and so on. Such camera may be mounted behind a further opening of the mounting side of the housing and may be made in a CCD-embodiment and may inform the driver about what happens behind the vehicle. Another option is an integrated sensor for inspecting the space behind the vehicle which is invisible for the driver.

### Brief Description of the Drawings

A presently preferred embodiment of the invention is described hereinafter with reference to the accompanying drawings which show:
- Fig. 1:: a perspective view of a housing for an interior space lightening unit at an angle from below;
- Fig. 2:: a perspective view of a housing according to Fig. 1 at an angle from above;
- Fig. 3 and 4:: schematic representations for explaining the functional modes of the internal space lightening unit.

### Detailed Description of Preferred Embodiments

The interior space lightening unit designated as a whole by 2 has a housing 1 of appealingly enameled metal which is coupled to the mass of the vehicle for shielding purposes. In an alternative the housing 1 may be made of plastic material.

The housing 1 has a substantially plane lower side 3 and an opposite substantially plane upper side 4. The lower side 3 is inclined relative to the upper side 4 such that the housing 1 tapers slightly when proceeding from the mounting side 5 connected to the upper side 4 and to the lower side 3.

A lower window 6 is inserted into the lower side 3 behind which a lamp (not shown) is mounted. A three-position-switch 7 is mounted to the lower side 3 which may be manipulated by hand.

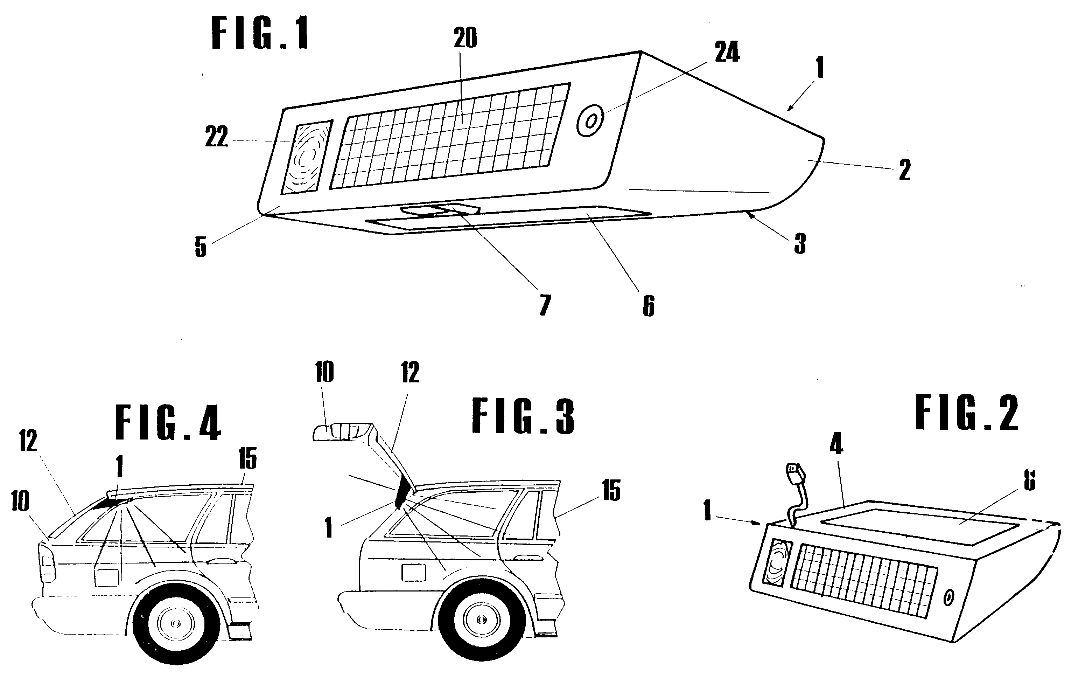

An upper window 8 is mounted within the upper side 4 behind which a second lamp (not shown) is mounted. Both lamps are connected in a not shown way to the carborne supply circuit of the vehicle and the three-position-switch 7 is connected to the current supply circuit for the lamps. The mounting side 5 may be made plane or bent or inclined with respect to the upper side 4 for adapting it to the form of the rearward window 12 such that the housing 1 having the mounting side 5 may be bonded to the inner surface of the rearward windows 12 of the rear flap 10 according to figures 3 and 4, specifically within the middle portion of the upper rim of the rearward window 12.

If the rear flap 10 is closed (Fig. 4) and a door of the vehicle 15 is open, the three-position-switch 7should assume a position wherein the first lamp is coupled to the carborne supply circuit. The first lamp then illuminates according to Fig. 4 the front portion of the loading area of the car 15. The lower side 3 may be inclined to such extent that the first lamp directs the light emitted therefrom forwardly to a great extent in the direction to the passengers sitting on the rear seats. In case the rear flap 10 is open (Fig. 3) and the three-position-switch 7 is thrown over, the second lamp is supplied by current from the carborne supply circuit and illuminates then the entire loading area of the car 15. Normally, the first lamp remains switched off then.

Instead of the hand operated switch 7 another switch may be connected to the supply current circuit for the first and the second lamps, which responds to the tilted position of the housing 1, and to this end, may be a mercury switch. Such a switch provides automatically for a supply current only for the first lamp if the rear flap is closed, and to the second lamp if the rear flap 10 is open.

Of course it is within the scope of the invention to design switch 7 in such a way that the first lamp and the second lamp are supplied with current in case the rear flap 10 is open, in which situation the first lamp illuminates the space behind the car.

The housing 1 may accommodate further functional components. Thus, the mounting side 5 includes a great central first opening 20 behind which a third brake light is mounted. The mounting side has a second opening 22 besides the first opening behind which a rain sensor is mounted for controlling the wiper motor for the rear window 12 in not shown manner. Further, the mounting side 5 may have a third opening 24 behind which a light sensor is mounted. Such light sensor may control an electrochrome internal rearward mirror for dimming in case the front light of a succeeding car glares. In an alternative or a supplement the light sensor may also control the light transmission of an electrochrome sunshine roof of the car.

Another opening (not shown) in mounting side 5 may be provided for a camera preferably in CCD embodiment for presenting information to the driver about the space behind the car, which may serve e.g. as a parking aid. A further option comprises a further sensor within the housing 1 for inspecting the invisible area behind the car.

It may be understood that the various openings of the housing 1 may be closed by clamping flaps in case the above explained optional components are not desired.

## Claims

1. Interior space lightening unit for vehicles having a housing (1) with a lower side (3) and an upper side (4) characterized in that the lower side (3) has a lower window (6) behind which a first lamp is arranged, that the upper side (4) has an upper window (5) behind which a second lamp is arranged and that a switch (7) is coupled to the current supply circuit for the lamps which is mounted within the housing adapted to be mounted to a tiltable support.

2. Lightening unit according to claim 1 characterized in that the housing (1) is mounted to a tiltable window (12) by a mounting side (5) thereof which is neither the lower side (3) nor the upper side (4) of the housing.

3. Lightening unit according to claim 1 or 2 characterized in that the switch (7) responds to a tilted position of the housing (1).

4. Lightening unit according to anyone of the preceding claims characterized in that the housing is bonded to the window (12) by the mounting side (5) thereof (5).

5. Lightening unit according to anyone of the preceding claims characterized in that the mounting side (5) includes a first opening (20) adapted to support a third brake lamp of the car (15).

6. Lightening unit according to anyone of the preceding claims characterized in that the mounting side (5) is provided with a second opening (22) adapted to accommodate a rain sensor which controls a wiper motor for the window (12).

7. Lightening unit according to anyone of the preceding claims characterized in that the mounting side (5) includes a third opening (20) adapted for accommodating a light sensor for controlling the light transmission of an electrochrome internal rear view mirror and and/or a sunshine roof and/or a visual cover blind of the car.
